(19) Europäisches Patentamt
European Patent Office
Office européen des brevets

(11) **EP 2 612 136 B1**

(12) **FASCICULE DE BREVET EUROPEEN**

(45) Date de publication et mention de la délivrance du brevet:
**11.02.2015 Bulletin 2015/07**

(21) Numéro de dépôt: **11758493.8**

(22) Date de dépôt: **30.08.2011**

(51) Int Cl.:
***G01N 27/04*** *(2006.01)*

(86) Numéro de dépôt international:
**PCT/FR2011/000482**

(87) Numéro de publication internationale:
**WO 2012/028791 (08.03.2012 Gazette 2012/10)**

(54) **PROCEDE DE CARTOGRAPHIE DE LA CONCENTRATION EN OXYGENE**

VERFAHREN ZUR KARTIERUNG DER SAUERSTOFFKONZENTRATION

METHOD FOR MAPPING OXYGEN CONCENTRATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.09.2010 FR 1003510**

(43) Date de publication de la demande:
**10.07.2013 Bulletin 2013/28**

(73) Titulaire: **Commissariat à l'Énergie Atomique et aux Énergies Alternatives 75015 Paris (FR)**

(72) Inventeurs:
- **VEIRMAN, Jordi**
  **74330 Poisy (FR)**
- **DUBOIS, Sébastien**
  **F-74950 Scionzier (FR)**
- **ENJALBERT, Nicolas**
  **F-81100 Burlats (FR)**

(74) Mandataire: **Talbot, Alexandre et al Cabinet Hecké Europole, BP 1537 10, rue d'Arménie 38025 Grenoble Cedex 1 (FR)**

(56) Documents cités:
**EP-A1- 0 020 993**

- **ULYASHIN A G ET AL: "Characterization of the oxygen distribution in Czochralski silicon using hydrogen-enhanced thermal donor formation", MATERIALS SCIENCE AND ENGINEERING B, ELSEVIER SEQUOIA, LAUSANNE, CH, vol. 73, no. 1-3, 1 avril 2000 (2000-04-01), pages 124-129, XP004192033, ISSN: 0921-5107, DOI: DOI: 10.1016/S0921-5107(99)00447-X cité dans la demande**
- **ARORA N D, HAUSER J R AND ROULSTON D J: "Electron and hole mobilities in silicon as a function of concentration and temperature", IEEE TRANSACTIONS ON ELECTRON DEVICES, vol. ED-29, no. 2, 27 février 1982 (1982-02-27), pages 292-195, XP002630839, cité dans la demande**
- **THURBER W R, MATTIS R L, LUI Y M AND FILLIBEN J J: "Resistivity-dopant density relationship for phosphorus-doped silicon", JOURNAL OF THE ELECTROCHEMICAL SOCIETY, vol. 127, 30 août 1980 (1980-08-30), pages 1807-1812, XP002630840,**

**Description**

**Domaine technique de l'invention**

L'invention est relative à un procédé permettant de cartographier la concentration en oxygène d'un échantillon semi-conducteur.

**État de la technique**

Les substrats en silicium destinés à l'industrie microélectronique ou aux applications photovoltaïques comprennent généralement de l'oxygène. Lorsqu'ils ne sont pas sous forme de précipités, les atomes d'oxygène occupent des positions interstitielles dans le réseau cristallin. Dans le cas du silicium monocristallin, obtenu par le procédé Czochralski, ou dans le cas du silicium polycristallin de qualité dite « solaire », la concentration en oxygène varie entre $10^{17}$ et $2.10^{18}$ atomes/cm$^3$.

L'oxygène en position interstitielle ($O_i$) joue un rôle important sur les propriétés mécaniques et électriques du silicium. En particulier, à des températures comprises entre 350 °C et 500 °C, l'oxygène forme des précipités appelés Doubles Donneurs Thermiques (DDT) qui modifient les propriétés électriques du matériau en créant des électrons libres. A plus haute température, l'oxygène forme d'autres précipités permettant de piéger des impuretés métalliques présentes dans le silicium. Un effet getter peut ainsi être obtenu. Par ailleurs, l'oxygène améliore les propriétés mécaniques des substrats en bloquant les dislocations introduites par les procédés de fabrication.

Pour les applications photovoltaïques, une concentration en oxygène élevée entraîne une diminution des performances, notamment une diminution du rendement de conversion des cellules photovoltaïques à base de silicium dopé au bore (B).

Il paraît donc important de connaître la répartition de l'oxygène au sein du substrat pour déterminer localement l'influence de l'oxygène sur les propriétés électriques et mécaniques du silicium. Cette information permet ensuite d'optimiser les procédés de cristallisation ou de fabrication des dispositifs.

La concentration en oxygène d'un échantillon est classiquement déterminée par spectroscopie infrarouge FTIR (« Fourier Transform InfraRed spectroscopy »). Cependant, cette technique est lente et imprécise. Par ailleurs, elle nécessite une préparation de la surface de l'échantillon.

L'article « Characterization of the oxygen distribution in Czochralski silicon using hydrogen-enhanced thermal donor formation » (A.G. Ulyashin et al., Materials Science and Engineering B73 124-129, 2000) décrit une autre technique de détermination de la concentration en oxygène.

Cette technique est basée sur la formation de donneurs thermiques DDT. Un traitement thermique assisté par un plasma hydrogène est appliqué à un échantillon de type P de manière à former une jonction PN. Puis, la profondeur de la jonction PN dans l'échantillon est déterminée à l'aide de mesures de résistance de type SRP (« Spreading Résistance Probe » en anglais) ou de mesures de capacité C-V (« Capacitance-Voltage » en anglais). La concentration en donneurs thermiques est ensuite calculée à partir de la profondeur de la jonction PN. Un modèle mathématique permet de déterminer la concentration en oxygène à partir de la concentration en donneurs thermiques.

Les méthodes de caractérisation employées requièrent, au même titre que la FTIR, une préparation de l'échantillon. La caractérisation SRP nécessite de biseauter l'échantillon pour établir le profil de résistance sur la profondeur de l'échantillon. La caractérisation C-V utilise des contacts métalliques à la surface de l'échantillon. Ces contacts sont difficiles à enlever sans dégrader ou polluer le matériau de l'échantillon.

En raison de la complexité de ces méthodes de caractérisation, la technique de mesure de l'article susmentionné est lente et difficilement applicable à des substrats de l'industrie microélectronique et photovoltaïque.

De plus, la préparation et l'hydrogénation du substrat rendent celui-ci inutilisable à l'issue de la mesure.

**Résumé de l'invention**

On constate qu'il existe un besoin de prévoir un procédé rapide et simple à mettre en oeuvre permettant de déterminer la concentration en oxygène d'un échantillon à partir de la concentration en donneurs thermiques.

On tend à satisfaire ce besoin par les étapes suivantes :

a) soumettre l'échantillon à un traitement thermique pour former des donneurs thermiques,

b) mesurer la résistivité en une zone de l'échantillon,

c) déterminer la concentration en donneurs thermiques à partir :

- d'une relation exprimant la mobilité des porteurs de charge en fonction d'une concentration en impuretés dopantes ionisées, en ajoutant à la concentration en impuretés dopantes ionisées quatre fois la concentration en donneurs thermiques, et

- de la valeur de résistivité mesurée.

On prévoit en outre, après la détermination de la concentration en oxygène, une étape de traitement thermique à une température supérieure ou égale à 650°C afin de restituer l'échantillon dans son état initial.

## Description sommaire des dessins

D'autres avantages et caractéristiques ressortiront plus clairement de la description qui va suivre de modes particuliers de réalisation donnés à titre d'exemples non limitatifs et illustrés à l'aide des dessins annexés, dans lesquels :

- la figure 1 représente des étapes d'un procédé de détermination de la concentration en oxygène $C_o$ selon l'invention,

- la figure 2 représente des abaques de la concentration en donneurs thermiques $N_{DDT}$ en fonction de la durée t du traitement thermique, pour différentes valeurs de la concentration en oxygène $C_o$,

- la figure 3 représente, en fonction de la résistivité initiale p, la durée t de traitement thermique nécessaire pour obtenir une variation de 10 % de la résistivité, pour un substrat de type n et un substrat de type p,

- la figure 4 représente des étapes supplémentaires du procédé de détermination de la figure 1,

- la figure 5 représente une cartographie de la concentration en oxygène $C_o$ obtenue à l'aide du procédé selon la figure 1, et

- la figure 6 représente des valeurs de la concentration en oxygène obtenues par spectroscopie infrarouge (FTIR) comparées à la cartographie de la figure 5.

## Description d'un mode de réalisation préféré de l'invention

On prévoit un procédé permettant de déterminer la concentration en oxygène $C_o$ d'un substrat en silicium à partir d'une mesure de la résistivité électrique $\rho$. En effet, la résistivité est un des paramètres électriques affectés par la génération de donneurs thermiques (DDT) issus de l'oxygène.

La résistivité varie en fonction de deux paramètres : la concentration m en porteurs de charge libres et la mobilité $\mu$ de ces porteurs. Son expression générale est :

$$\rho = \frac{1}{m \cdot q \cdot \mu} \qquad (1)$$

q étant la charge élémentaire (q = $1{,}6.10^{-19}$ C).

En soumettant le substrat à une température comprise entre 350 °C et 500 °C, des donneurs thermiques vont être générés. Des électrons libres sont ainsi créés dans le substrat, ce qui engendre une variation de la concentration en porteurs de charge et donc une variation de la résistivité.

La mesure de la résistivité après un traitement thermique permet donc de quantifier cette variation de la concentration en porteurs de charge et d'en déduire la concentration en donneurs thermiques $N_{DDT}$, puis la concentration en oxygène $C_o$.

Pour obtenir des résultats plus précis, l'influence des donneurs thermiques sur la mobilité a été déterminée. En particulier, un nouveau modèle de la mobilité $\mu(N_{DDT})$, qui tient compte de la concentration en donneurs thermiques $N_{DDT}$, a été établi.

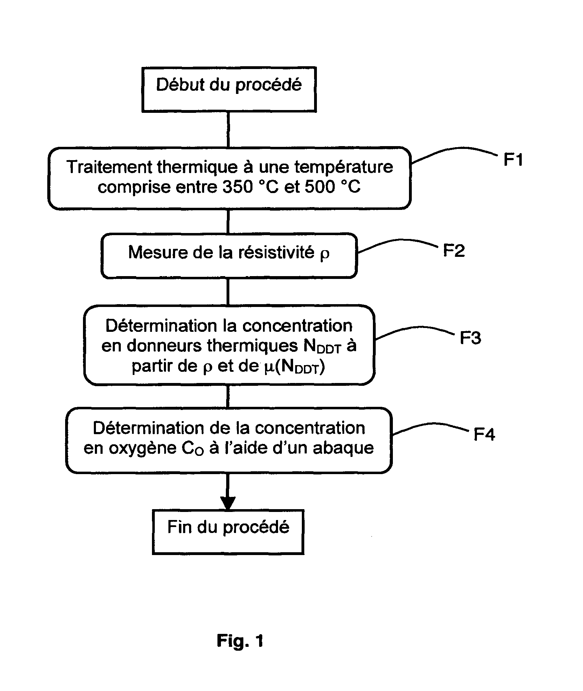

La figure 1 représente des étapes F1 à F4 d'un procédé de détermination de la concentration en oxygène $C_o$.

Lors d'une première étape F1, un substrat en silicium contenant de l'oxygène est soumis à un traitement thermique, ou recuit, pour former des donneurs thermiques. La température du recuit est, de préférence, comprise entre 350 °C et 500 °C. En effet, comme cela sera décrit plus loin, la cinétique de formation des donneurs thermiques est bien connue dans cette plage de températures, notamment à 450 °C.

Lors d'une étape F2, la résistivité est mesurée en une zone cible du substrat. Cette mesure peut être réalisée de façon simple par la méthode des quatre pointes.

L'étape suivante (F3) consiste à calculer la concentration en donneurs thermiques $N_{DDT}$ à partir de cette mesure de résistivité. Pour cela, on utilise la relation (1) et des relations décrivant la concentration m en porteurs libres et la mobilité $\mu$ en fonction de la concentration $N_{DDT}$.

Ce nouveau modèle mathématique est décrit en détail ci-après.

Dans un substrat dopé de type p, les porteurs de charge majoritaires sont des trous. Leur nombre est défini par la quantité d'impuretés dopantes implantées dans le silicium, généralement des atomes de bore (B). Ces atomes sont appelés accepteurs d'électrons. La concentration en porteurs de charge majoritaires est alors égale à la concentration en bore : m = [B].

A l'inverse, dans un substrat de type n, les porteurs de charge majoritaires sont des électrons. Les impuretés dopantes sont des atomes donneurs d'électrons, par exemple des atomes de phosphore (P). On a alors : m = [P].

Par ailleurs, il existe des substrats dit « compensés » qui présentent les deux types d'impuretés dopantes. Dans ce cas, la concentration en porteurs de charge majoritaires sera égale à :

m = [B] - [P] si le substrat est de type p,

m = [P] - [B] si le substrat est de type n.

Après le traitement thermique, chaque donneur thermique libère deux électrons. La concentration en porteurs de charge majoritaires évolue de la manière suivante :

pour le substrat de type n :

$$m = [P] + 2*N_{DDT} \qquad (2),$$

et

pour le substrat de type p :

$$m = [B] - 2*N_{DDT}. \qquad (3).$$

Pour un substrat compensé, on aura :

$$m = [P] - [B] + 2*N_{DDT} \qquad (2'),$$

pour un substrat de type n,

$$m = [B] - [P] - 2*N_{DDT}. \qquad (3'),$$

pour un substrat de type p.

Ainsi, après formation des donneurs thermiques DDT, la concentration d'électrons est augmentée de deux fois la concentration $N_{DDT}$ pour un substrat de type n. Dans un substrat de type p, la concentration en trous est diminuée de deux fois la concentration $N_{DDT}$ suite à un rééquilibrage des charges.

La mobilité $\mu$ représente l'aptitude des porteurs de charge à se déplacer dans un matériau sous l'action d'un champ électrique. La mobilité dans un silicium monocristallin exempt d'impuretés métalliques et de dislocations a fait l'objet de nombreuses études.

En particulier, l'article « Electron and Hole Mobilities in Silicon as a Function of Concentration and Temperature » (Arora N.D. et al., IEEE transactions on electron devices, vol. ED-29, no.2, p.292, 1982) décrit la mobilité des électrons et des trous, en fonction de la concentration de dopants et de la température T.

Celle-ci peut être exprimée par la relation suivante :

$$\mu\left(T, N_{A/D}\right) = \mu_{\min} T_n^{\beta 1} + \frac{\left(\mu_{\max} - \mu_{\min}\right) T_n^{\beta 2}}{1 + \left(\dfrac{N_{A/D}}{N_{ref} T_n^{\beta 3}}\right)^{\alpha T_n^{\beta 4}}} \qquad (4),$$

$T_n$ est la température normalisée par rapport à la température ambiante ($T_n$=T/300). $N_A$, respectivement $N_D$, est la concentration en impuretés dopantes ionisées accepteurs, respectivement donneurs (par exemple bore ou phosphore). Les paramètres $\mu_{max}$, $\mu_{min}$, $N_{ref}$, $\alpha$, $\beta 1$, $\beta 2$, $\beta 3$, $\beta 4$ sont donnés pour les deux types de porteurs de charge dans le tableau 1 ci-dessous pour le silicium.

**Tableau 1**

| Porteurs majoritaires dans Si | $\mu_{max}$ (cm$^2$.V$^{-1}$·s$^{-1}$) | $\mu_{min}$ (cm$^2$.V$^{-1}$·s$^{-1}$) | $N_{ref}$ (cm$^{-3}$) | $\alpha$ | $\beta 1$ | $\beta 2$ | $\beta 3$ | $\beta 4$ |
|---|---|---|---|---|---|---|---|---|
| Electrons | 1417 | 60 | $9{,}64.10^{16}$ | 0,664 | -0,57 | -2,33 | 2,4 | -0,146 |
| Trous | 470 | 37,4 | $2{,}82.10^{17}$ | 0,642 | -0,57 | -2,33 | 2,4 | -0,146 |

Le premier terme de l'expression (4) traduit la dépendance de la mobilité en fonction de la température T, à cause des microvibrations (appelées phonons) induites par l'élévation de la température. Le deuxième terme traduit l'influence des impuretés dopantes ionisées $N_A$ et/ou $N_D$, qui gênent le déplacement des porteurs de charge.

Cependant, cette expression ne tient pas compte de la présence des donneurs thermiques qui sont aussi des impuretés dopantes et donc perturbent les mesures de mobilité.

Les inventeurs ont établi une nouvelle expression de la mobilité en adaptant l'expression (4) à un silicium contenant des donneurs thermiques.

Les donneurs thermiques sont également considérés comme des impuretés ionisées. Contrairement aux atomes de bore ou phosphore ionisés une fois, les donneurs thermiques sont ionisés deux fois lors de l'étape de recuit (deux électrons par DDT). L'aptitude d'une impureté dopante à gêner le déplacement des porteurs de charge est appelé pouvoir diffusant. Le pouvoir diffusant d'un atome ionisé n fois est égal à n$^2$. Dans le cas d'un donneur thermique, il est donc égal à 4.

L'influence d'un donneur thermique sur la mobilité est donc 4 fois supérieure à celle d'un atome accepteur ou donneur. Ainsi, pour exprimer la mobilité en fonction des donneurs thermiques, on modifie l'expression de la mobilité (4) en ajoutant quatre fois la concentration en donneurs thermiques $N_{DDT}$ à la concentration en impuretés dopantes $N_D$ et/ou $N_A$.

L'expression (4) devient :

$$\mu\left(T, N_{A/D}, N_{DDT}\right) = \mu_{\min} T_n^{\beta 1} + \frac{\left(\mu_{\max} - \mu_{\min}\right) T_n^{\beta 2}}{1 + \left(\dfrac{N_{A/D} + 4 \times N_{DDT}}{N_{ref} T_n^{\beta 3}}\right)^{\alpha T_n^{\beta 4}}} \qquad (5),$$

avec $N_{A/D} = N_A$ ou $N_D$ ou $N_A + N_D$ selon le type de substrat.

On obtient alors une relation de la mobilité dans un silicium monocristallin dopé comprenant des donneurs thermiques. Cette nouvelle relation est, de préférence, utilisée pour déterminer la concentration en donneurs thermiques $N_{DDT}$. En effet, l'équation (1) $\rho\left(N_{DDT}\right) = \dfrac{1}{m\left(N_{DDT}\right) \cdot q \cdot \mu\left(N_{DDT}\right)}$ peut être résolue à partir de la valeur de résistivité obtenue à l'étape F3.

L'étape F4 du procédé de la figure 1 permet de déterminer la concentration en oxygène $C_o$ à l'aide d'abaques en connaissant la concentration en donneurs thermiques $N_{DDT}$. Pour constituer ces abaques, il est nécessaire de s'intéresser plus en détail au phénomène de formation des donneurs thermiques.

L'article « Effect of oxygen concentration on the kinetics of thermal donor formation in silicon at temperatures between 350 and 500 °C » (Londos C.A. et al., Appl. Phys. Lett. 62 (13), pp. 1525, 1993) décrit la cinétique de formation des donneurs thermiques dans le silicium, pour des températures comprises entre 350 °C et 500 °C. Plus particulièrement, l'article montre que la vitesse de formation des donneurs thermiques dépend fortement de la concentration en oxygène.

Les résultats de cette étude ont permis d'établir des abaques de la concentration en donneurs thermiques $N_{DDT}$ en fonction de la durée t de traitement thermique, pour différentes valeurs de la concentration en oxygène $C_o$.

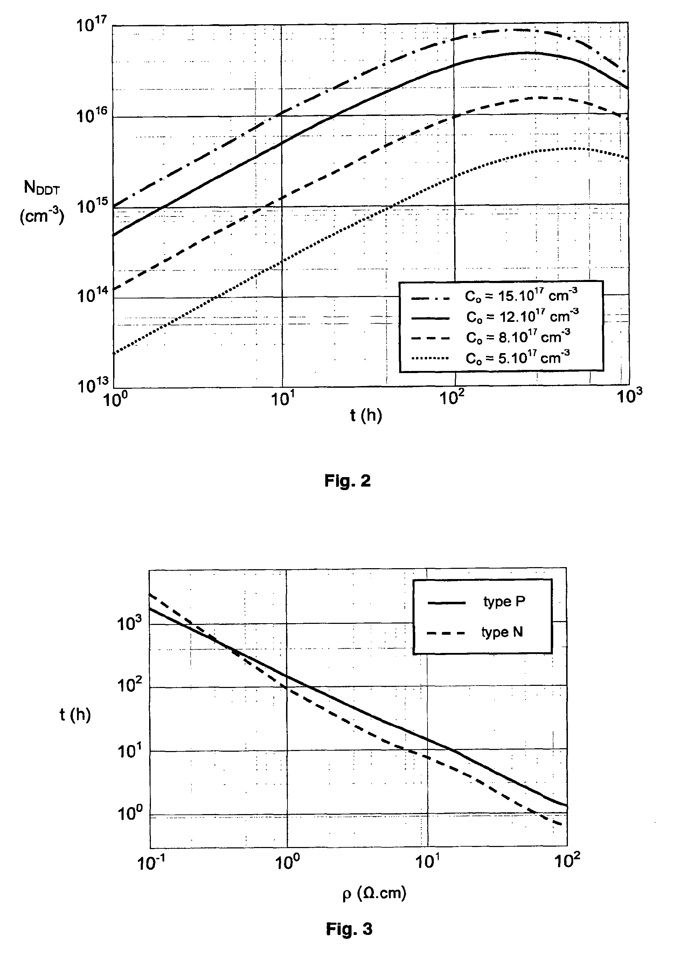

La figure 2 représente l'un de ces abaques, pour une température de recuit de l'ordre de 450°C. Cette température constitue d'ailleurs un bon compromis entre la vitesse de génération des donneurs thermiques et la concentration maximale obtenue. Une température supérieure à 450 °C favorise la vitesse de formation des DDT au détriment de la concentration maximale. Une température élevée est donc à privilégier lorsque l'on suppose que la concentration en oxygène est importante, par exemple supérieure à $5.10^{17} cm^{-3}$. A l'inverse, une température inférieure à 450 °C permettra d'augmenter la concentration maximale de DDT et pourra être utilisée pour des substrats dont la concentration approximative en oxygène est faible, par exemple inférieure à $5.10^{17}$ $cm^{-3}$.

On peut remarquer sur la figure 2 qu'une faible variation de la concentration en oxygène $C_o$ conduit à une forte variation de la concentration en donneurs thermiques $N_{DDT}$. A titre d'exemple, au bout d'une heure de recuit, un substrat de concentration en oxygène égale à $5.10^{17}$ $cm^{-3}$ forme $2,5.10^{13}$ DDT par $cm^{-3}$, alors qu'un substrat avec une concentration en oxygène trois fois supérieure forme environ 100 fois plus de donneurs thermiques.

L'abaque de la figure 2 permet de déterminer la valeur de la concentration en oxygène $C_o$ dans la zone du substrat mesurée, pour une concentration $N_{DDT}$ et une durée de recuit t données.

Pour augmenter la précision du procédé de détermination de la concentration en oxygène, il est préférable que la durée du recuit soit suffisamment longue pour créer une variation d'au moins 10 % de la résistivité. En effet, une telle variation est facilement mesurable.

La figure 3 représente, pour un substrat de type P et un substrat de type N, la durée t de recuit à 450 °C nécessaire pour observer une variation de 10 % entre la résistivité initiale p, représentée en abscisses, et la valeur mesurée après recuit. On utilisera, de préférence, ces courbes pour déterminer une durée de recuit minimum. Cette durée est, de préférence, comprise entre 1 minute et 1000 minutes.

Le calcul de $N_{DDT}$ réalisé à l'étape F3 grâce aux équations (1), (2) (ou (2'), (3), (3')) et (5) nécessite également de connaître la valeur de la concentration en impuretés dopantes $N_A$ et/ou $N_D$. Cette valeur est généralement donnée par le fournisseur des substrats. Dans le cas contraire, elle peut être déterminée lors d'une étape supplémentaire du procédé de la figure 1.

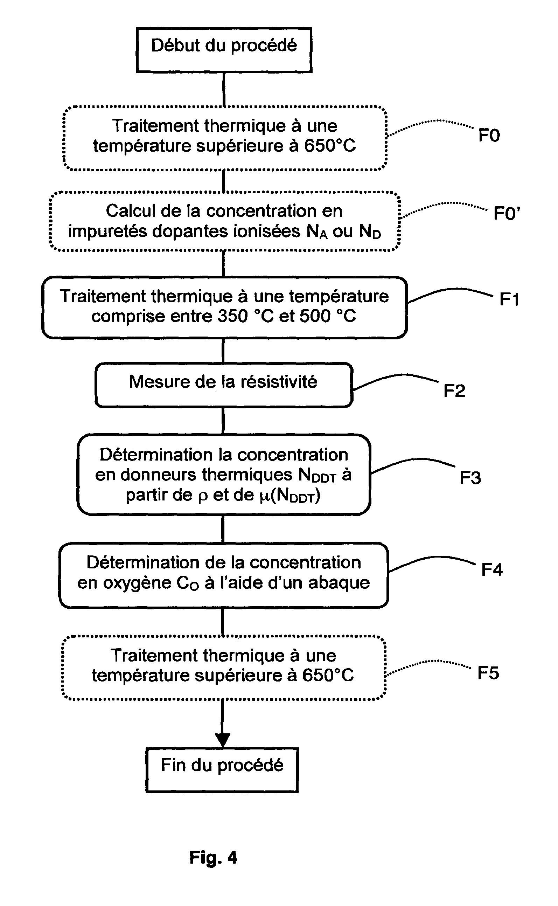

La figure 4 représente des étapes supplémentaires du procédé de détermination, dont une permet de déterminer la concentration en impuretés dopantes $N_A$ ou $N_D$.

Lorsque la concentration $N_A$ ou $N_D$ est inconnue, on peut réaliser, avant de procéder au recuit, une mesure de la résistivité initiale du substrat lors d'une étape F0'. Cette mesure permet ensuite de calculer la concentration en impuretés dopantes $N_A$ ou $N_D$.

Dans le cas d'un substrat compensé, on obtient la concentration $N_A - N_D$. Ainsi, pour accéder à $N_A$ et à $N_D$, il faudra soit connaître au moins une valeur du fabricant, soit faire des mesures supplémentaires de type GDMS (Glow Discharge Mass Spectroscopy).

Afin de s'assurer que le substrat ne comporte pas de donneurs thermiques dans son état initial, ce qui pourrait fausser la valeur de $N_A$ ou $N_D$, on procède, de préférence, à un recuit, en F0, à une température supérieure ou égale à 650 °C. Cela rend les précipités d'oxygène (ou donneurs thermiques DDT) instables et les élimine. Les atomes d'oxygène reprennent alors leurs positions interstitielles.

Le recuit F0 peut être réalisé même lorsque la concentration $N_A$ ou $N_D$ est connue.

Un tel recuit est, de préférence, également utilisé à la fin du procédé, en F5, après avoir déterminé la concentration en oxygène dans la zone souhaitée (F4). Grâce à cette étape de recuit F5, le substrat revient dans son état initial et peut être réutilisé.

Le procédé de détermination représenté à la figure 1 peut avantageusement être appliqué en plusieurs zones du substrat, de manière à constituer une cartographie complète de celui-ci. Une telle cartographie peut ensuite être utilisée pour optimiser la fabrication de dispositifs.

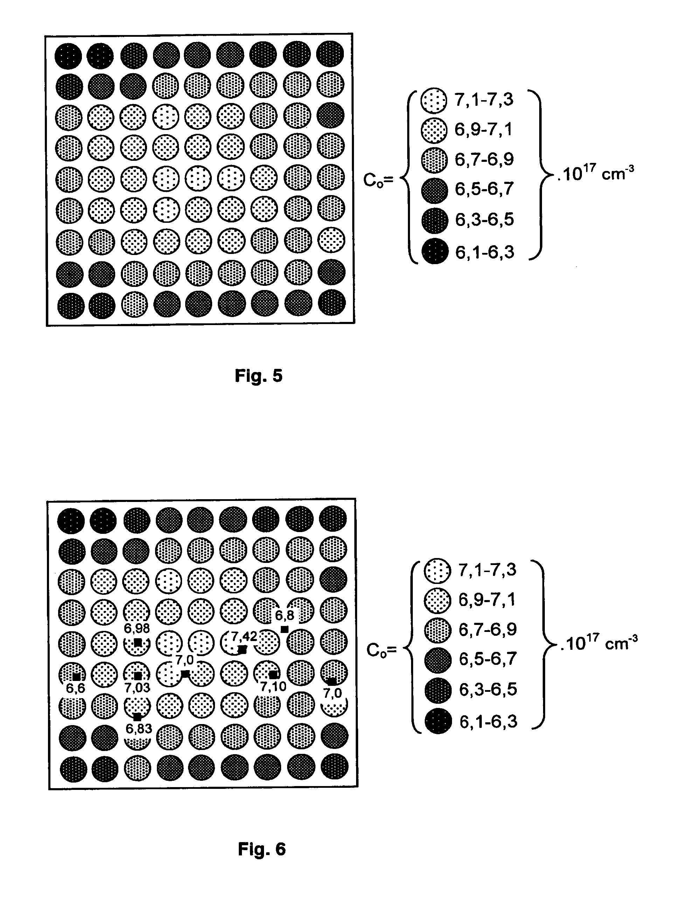

La figure 5 représente, de manière schématique, une cartographie en oxygène obtenue à l'aide du procédé de mesure. Le substrat utilisé est en silicium dopé au phosphore (type N) et ne présente pas de donneurs thermiques initialement. Sa résistivité initiale est voisine de 18 $\Omega$.cm. La concentration en oxygène varie entre $6,1.10^{17}$ $cm^{-3}$ et $7,1.10^{17}$ $cm^{-3}$.

Le modèle mathématique utilisé assure au procédé de détermination une bonne sensibilité, en raison de la forte dépendance entre la concentration en donneurs thermiques $N_{DDT}$ et la concentration en oxygène $C_o$. De plus, la caractérisation en résistivité est simple à réaliser et rapide. Elle utilise un outil de caractérisation standard, peu coûteux et peut être appliquée à grande échelle. Le procédé de détermination a une précision de l'ordre de 1 % et une résolution spatiale de 60 $\mu$m environ.

La figure 6 représente des valeurs de la concentration en oxygène $C_O$ obtenues à l'aide de la technique classique FTIR en plusieurs zones du substrat, repérées par des carrés noirs. La cartographie de la figure 5 a été reproduite à titre de comparaison. On remarque une bonne correspondance entre les valeurs obtenues par le procédé de détermination et celles de la technique FTIR, tant au niveau des valeurs absolues qu'au niveau des variations à l'échelle du substrat.

De nombreuses variantes et modifications du procédé de détermination décrit ici apparaîtront à l'homme du métier. Le procédé a été décrit en relation avec un substrat de silicium. Toutefois, le procédé peut être également appliqué à des substrats de germanium ou de silicium-germanium. En effet, le germanium est également un semi-conducteur dans lequel des donneurs thermiques peuvent être formés en présence d'oxygène. On utilisera alors comme point de départ un modèle de la mobilité propre au germanium, puis on l'adaptera en ajoutant quatre fois la concentration en donneurs thermiques $N_{DDT}$ à la concentration en impuretés dopantes $N_A$ et/ou $N_D$.

## Revendications

1. Procédé de détermination de la concentration en oxygène ($C_O$) d'un échantillon en matériau semi-conducteur à partir de la concentration en donneurs thermiques ($N_{DDT}$), comprenant l'étape suivante :

   a) soumettre (F1) l'échantillon à un traitement thermique pour former des donneurs thermiques (DDT),

   **caractérisé en ce qu'**il comprend les étapes suivantes :

   b) mesurer (F2) la résistivité (p) en une zone de l'échantillon,
   c) déterminer (F3) la concentration en donneurs thermiques ($N_{DDT}$) à partir :

   - d'une relation exprimant la mobilité ($\mu$) des porteurs de charge en fonction d'une concentration en impuretés dopantes ionisées ($N_A$, $N_D$), en ajoutant à la concentration en impuretés dopantes quatre fois la concentration en donneurs thermiques ($N_{DDT}$), et
   - de la valeur de résistivité mesurée.

2. Procédé selon la revendication 1, **caractérisé en ce que** la relation exprimant la mobilité s'écrit :

$$\mu = \mu_{\min} T_n^{\beta 1} + \frac{(\mu_{\max} - \mu_{\min}) T_n^{\beta 2}}{1 + \left( \dfrac{N_{A/D} + 4 \times N_{DDT}}{N_{ref} T_n^{\beta 3}} \right)^{\alpha T_n^{\beta 4}}},$$

où:

   $T_n$ est égal à T/300, avec T la température,
   $N_{A/D}$ est la concentration en impuretés dopantes ionisées de l'échantillon,
   $N_{DDT}$ est la concentration en donneurs thermiques,
   $\alpha$, $\beta 1$, $\beta 2$, $\beta 3$, $\beta 4$, $\mu_{\max}$, $\mu_{\min}$, $N_{ref}$ sont des paramètres constants en fonction de la nature des porteurs de charges.

3. Procédé selon la revendication 1, **caractérisé en ce que** le traitement thermique a une durée (t) telle que la résistivité (p) de l'échantillon varie d'au moins 10 % par rapport à sa valeur initiale.

4. Procédé selon la revendication 3, **caractérisé en ce que** la durée (t) du traitement thermique est comprise entre 1 minute et 1000 minutes.

5. Procédé selon la revendication 1, **caractérisé en ce qu'**il comprend initialement une étape (F0) de traitement thermique à une température supérieure ou égale à 650°C.

6. Procédé selon la revendication 5, **caractérisé en ce qu'**il comprend la détermination (F0') de la concentration en impuretés dopantes ($N_A$, $N_D$) de l'échantillon par une mesure de résistivité.

**7.** Procédé selon la revendication 1, **caractérisé en ce qu'**il comprend, après avoir déterminé la concentration en oxygène ($C_O$), une étape (F5) de traitement thermique à une température supérieure ou égale à 650°C.

**8.** Procédé selon la revendication 1, **caractérisé en ce que** les étapes b) et c) sont répétées en plusieurs zones de l'échantillon de façon à constituer une cartographie.

**Patentansprüche**

**1.** Verfahren zur Bestimmung der Sauerstoffkonzentration ($C_O$) einer Probe aus Halbleitermaterial anhand der Konzentration an thermischen Donatoren ($N_{DDT}$), umfassend den folgenden Schritt:

a) Unterziehen (F1) der Probe einer Wärmebehandlung, um thermische Donatoren (DDT) zu bilden,

**dadurch gekennzeichnet, dass** es die folgenden Schritte umfasst:

b) Messen (F2) des spezifischen Widerstandes (p) in einem Bereich der Probe,
c) Bestimmen (F3) der Konzentration an thermischen Donatoren ($N_{DDT}$) mittels:

- einer Beziehung, die die Beweglichkeit ($\mu$) der Ladungsträger in Abhängigkeit von einer Konzentration an ionisierten Dotierungsunreinheiten ($N_A$, $N_D$) zum Ausdruck bringt, indem der Konzentration an Dotierungsunreinheiten die vierfache Konzentration an thermischen Donatoren ($N_{DDT}$) zugefügt wird, und
- des gemessenen Wertes des spezifischen Widerstands.

**2.** Verfahren nach Anspruch 1, **dadurch gekennzeichnet, dass** die die Beweglichkeit zum Ausdruck bringende Beziehung sich schreibt:

$$\mu = \mu_{min} T_n^{\beta 1} + \frac{(\mu_{max} - \mu_{min}) T_n^{\beta 2}}{1 + \left( \dfrac{N_{AID} + 4 \times N_{DDT}}{N_{ref} T_n^{\beta 3}} \right)^{\alpha T_n^{\beta 4}}},$$

worin:

$T_n$ gleich T/300 ist, wobei T die Temperatur ist,
$N_{A/D}$ die Konzentration an ionisierten Dotierungsunreinheiten der Probe ist,
$N_{DDT}$ die Konzentration an thermischen Donatoren ist,
$\alpha$, $\beta 1$, $\beta 2$, $\beta 3$, $\beta 4$, $\mu_{max}$, $\mu_{min}$, $N_{ref}$ konstante Parameter in Abhängigkeit von der Art der Ladungsträger sind.

**3.** Verfahren nach Anspruch 1, **dadurch gekennzeichnet, dass** die Wärmebehandlung eine Dauer (t) hat, die derart ist, dass der spezifische Widerstand (p) der Probe um wenigstens 10 % gegenüber seinem Ausgangswert variiert.

**4.** Verfahren nach Anspruch 3, **dadurch gekennzeichnet, dass** die Dauer (t) der Wärmebehandlung zwischen 1 Minute und 1000 Minuten beträgt.

**5.** Verfahren nach Anspruch 1, **dadurch gekennzeichnet, dass** es anfangs einen Schritt (F0) zur Wärmebehandlung bei einer Temperatur von über oder gleich 650 °C umfasst.

**6.** Verfahren nach Anspruch 5, **dadurch gekennzeichnet, dass** es die Bestimmung (F0') der Konzentration an Dotierungsunreinheiten ($N_A$, $N_D$) der Probe durch eine Messung des spezifischen Widerstandes umfasst.

**7.** Verfahren nach Anspruch 1, **dadurch gekennzeichnet, dass** es, nachdem die Sauerstoffkonzentration ($C_O$) bestimmt wurde, einen Schritt (F5) zur Wärmebehandlung bei einer Temperatur von über oder gleich 650 °C umfasst.

**8.** Verfahren nach Anspruch 1, **dadurch gekennzeichnet, dass** die Schritte b) und c) in mehreren Bereichen der Probe wiederholt werden, um eine Kartierung zu bilden.

**Claims**

1. Method for determining the oxygen concentration ($C_O$) of a sample made of a semiconductor material from the thermal donor concentration ($N_{TDD}$), comprising the step of:

   a) submitting (F1) the sample to a heat treatment to form thermal donors (TDD),

   **characterized in that** it comprises the steps of:

   b) measuring (F2) the resistivity (p) in an area of the sample,
   c) determining (F3) the thermal donor concentration ($N_{TDD}$) from:

   - a relation expressing the mobility ($\mu$) of charge carriers according to an ionized dopant impurity concentration ($N_A$, $N_D$), by adding to the ionized dopant impurity concentration four times the thermal donor concentration ($N_{TDD}$), and
   - the measured resistivity value.

2. Method according to claim 1, **characterized in that** the relation expressing mobility can be written as:

$$\mu = \mu_{\min} T_n^{\beta 1} + \frac{(\mu_{\max} - \mu_{\min}) T_n^{\beta 2}}{1 + \left( \dfrac{N_{A/D} + 4 \times N_{TDD}}{N_{ref} T_n^{\beta 3}} \right)^{\alpha T_n^{\beta 4}}},$$

where:

   $T_n$ is equal to T/300, T being temperature,
   $N_{A/D}$ is the ionized dopant impurity concentration of the sample,
   $N_{TDD}$ is the thermal donor concentration,
   $\alpha$, $\beta 1$, $\beta 2$, $\beta 3$, $\beta 4$, $\mu_{\max}$, $\mu_{\min}$, $N_{ref}$ are constant parameters according to the nature of the charge carriers.

3. Method according to claim 1, **characterized in that** the heat treatment has a duration (t) such that the resistivity (p) of the sample varies by at least 10 % with respect to its initial value.

4. Method according to claim 3, **characterized in that** the duration (t) of the heat treatment ranges between 1 minute and 1000 minutes.

5. Method according to claim 1, **characterized in that** it initially comprises a step (F0) of heat treatment at a temperature greater than or equal to 650 °C.

6. Method according to claim 5, **characterized in that** it comprises determining (F0') the dopant impurity concentration ($N_A$, $N_D$) of the sample by a resistivity measurement.

7. Method according to claim 1, **characterized in that** it comprises, after having determined the oxygen concentration ($C_O$), a step (F5) of heat treatment at a temperature greater than or equal to 650 °C.

8. Method according to claim 1, **characterized in that** steps b) and c) are repeated in several areas of the sample to perform a mapping.

Début du procédé

Traitement thermique à une température
comprise entre 350 °C et 500 °C    F1

Mesure de la résistivité $\rho$    F2

Détermination la concentration
en donneurs thermiques $N_{DDT}$ à
partir de $\rho$ et de $\mu(N_{DDT})$    F3

Détermination de la concentration
en oxygène $C_O$ à l'aide d'un abaque    F4

Fin du procédé

**Fig. 1**

**Fig. 2**

**Fig. 3**

Début du procédé

Traitement thermique à une
température supérieure à 650°C — F0

Calcul de la concentration en
impuretés dopantes ionisées $N_A$ ou $N_D$ — F0'

Traitement thermique à une température
comprise entre 350 °C et 500 °C — F1

Mesure de la résistivité — F2

Détermination la concentration
en donneurs thermiques $N_{DDT}$ à
partir de $\rho$ et de $\mu(N_{DDT})$ — F3

Détermination de la concentration
en oxygène $C_O$ à l'aide d'un abaque — F4

Traitement thermique à une
température supérieure à 650°C — F5

Fin du procédé

**Fig. 4**

**Fig. 5**

**Fig. 6**

EP 2 612 136 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A.G. ULYASHIN et al.** Characterization of the oxygen distribution in Czochralski silicon using hydrogen-enhanced thermal donor formation. *Materials Science and Engineering,* 2000, vol. B73, 124-129

- **ARORA N.D. et al.** Electron and Hole Mobilities in Silicon as a Function of Concentration and Temperature. *IEEE transactions on electron devices,* 1982, vol. ED-29 (2), 292
- **LONDOS C.A. et al.** Effect of oxygen concentration on the kinetics of thermal donor formation in silicon at temperatures between 350 and 500 °C. *Appl. Phys. Lett.,* 1993, vol. 62 (13), 1525